(19) Europäisches Patentamt
European Patent Office
Office européen des brevets

(11) **EP 4 140 783 B1**

(12) **EUROPEAN PATENT SPECIFICATION**

(45) Date of publication and mention
of the grant of the patent:
**23.04.2025 Bulletin 2025/17**

(21) Application number: **21193824.6**

(22) Date of filing: **30.08.2021**

(51) International Patent Classification (IPC):
***B60C 23/04*** (2006.01)

(52) Cooperative Patent Classification (CPC):
**B60C 23/0484; B60C 23/0474; B60C 23/0476; B60C 23/0477**

(54) **TIRE PRESSURE MONITORING SYSTEM AND METHOD**

REIFENDRUCKÜBERWACHUNGSSYSTEM UND -VERFAHREN

SYSTÈME ET PROCÉDÉ DE SURVEILLANCE DE LA PRESSION DES PNEUS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**01.03.2023 Bulletin 2023/09**

(73) Proprietor: **The Goodyear Tire & Rubber Company**
**Akron, OH 44316 (US)**

(72) Inventors:
• **SINGH, Kanwar Bharat**
**L-7363 Lorentzweiler (LU)**
• **DOLBERG, Lautaro**
**L-1725 Luxembourg (LU)**

(74) Representative: **Kutsch, Bernd**
**Goodyear S.A.**
**Patent Department**
**Avenue Gordon Smith**
**7750 Colmar-Berg (LU)**

(56) References cited:
**EP-A1- 1 384 604      EP-A1- 2 692 550**
**WO-A1-2009/036547**

## Description

Field of the Invention

The invention relates generally to tire monitoring systems and methods. More particularly, the invention relates to systems and methods that monitor conditions in a tire, such as tire pressure. Specifically, the invention is directed to a system and to a method that obtains tire pressure data, determines if a rapid air pressure leak or a slow air pressure leak is present, and generates a corresponding notification.

Background of the Invention

Vehicle tires, and particularly pneumatic tires, typically have certain conditions or parameters that are beneficial to monitor during vehicle operation. For example, monitoring the pressure of a pneumatic tire may be helpful in assessing the condition and/or performance of the tire, as a low pressure may indicate that there is an issue with the tire.

To monitor tire pressure, techniques have been developed to measure the pressure inside the tire cavity using sensors that are attached to the tire. Such techniques obtain pressure data in real time from the sensors.

The measured tire pressure may be correlated to a specific tire and transmitted to an electronic control system of the vehicle. The measured tire pressure data may then be employed to improve the function of vehicle systems, such as an anti-lock brake system (ABS), electronic stability control system (ECS), and the like. The measured tire pressure data may also be sent to an operator of the vehicle.

In addition, for fleets of commercial vehicles or passenger vehicles, it is desirable for a manager of the fleet to be informed of tire pressure to make informed decisions about the tires and the vehicle. For example, in the event that a pressure measurement is below a threshold value, an alert may be sent to the fleet manager. The fleet manager may then instruct the vehicle operator to reduce the vehicle speed or direct the vehicle to a service center.

However, prior art techniques typically only compare the measured pressure to the threshold value and transmit an alert when the measured pressure drops below the threshold value. Such techniques lack precision, as they may generate an alert that is not needed. In addition, prior art techniques do not distinguish between a rapid leak condition and a slow leak condition. Detection of a slow leak detection is particularly advantageous for fleet managers, as preventive measures for the tire may be taken according to a fleet maintenance schedule, rather than unnecessarily removing the vehicle from immediate service.

As a result, there is a need in the art for a system that obtains tire pressure data, determines with precision if a rapid air pressure leak or a slow air pressure leak is present, and generates a corresponding notification.

WO 2009/036547 A1 describes a system in accordance with the preamble of claim 1.

A further method and system for processing information in a tire pressure monitoring system in known from EP 1 384 604 A1.

EP 2 692 550 A1 describes a method and apparatus for determining a tires condition using ideal gas law.

Summary of the Invention

The invention relates to a system in accordance with claim 1 and to a method in accordance with claim 15.

Dependent claims refer to preferred embodiments of the invention.

According to an aspect of an exemplary embodiment of the invention, a tire pressuring monitoring system for monitoring the pressure in at least one tire supporting a vehicle is provided. The system includes at least one sensor mounted on the tire for measuring a pressure and a temperature of the tire. Transmission means transmit the measured pressure data and temperature data to a processor, and a tire pressure model is executed on the processor. The tire pressure model includes a driving event extractor to extract cold pressure data from the measured pressure data, and a temperature compensator to generate a compensated cold tire pressure from the cold pressure data. A noise filter filters sensor noise and generates a filtered cold tire pressure from the compensated cold tire pressure. A detection module receives the filtered cold tire pressure and determines an air pressure leak rate of the tire. A leak notification corresponding to the air pressure leak rate is generated by the tire pressure model.

Brief Description of the Drawings

The invention will be described by way of example and with reference to the accompanying drawings, in which:

Figure 1 is a schematic perspective view of a vehicle and tire that employ an exemplary embodiment of the tire pressure monitoring system of the present invention, showing the tire partially in section;
Figure 2 is a schematic plan view of the vehicle shown in Figure 1;
Figure 3 is a schematic perspective view of the vehicle shown in Figure 1 with a representation of data transmission to a cloud-based server and to a fleet management device;
Figure 4 is a flow diagram showing aspects of an exemplary embodiment of the tire pressure monitoring system of the present invention;
Figure 5 is a graphical representation of an aspect of the tire pressure monitoring system shown in Figure 4;

Figure 6 is another graphical representation of the aspect of the tire pressure monitoring system shown in Figure 5;

Figure 7 is a graphical representation of another aspect of the tire pressure monitoring system shown in Figure 4;

Figure 8 is another graphical representation of the aspect of the tire pressure monitoring system shown in Figure 7;

Figure 9 is a graphical representation of another aspect of the tire pressure monitoring system shown in Figure 4;

Figure 10 is a graphical representation of another aspect of the tire pressure monitoring system shown in Figure 4;

Figure 11 is a graphical representation of notification types in accordance with the tire pressure monitoring system shown in Figure 4;

Figure 12 is a graphical representation of analysis type based on rate of pressure loss in accordance with the tire pressure monitoring system shown in Figure 4;

Figure 13 is a flow diagram of an analysis model based on a rapid rate of pressure loss in accordance with the tire pressure monitoring system shown in Figure 4; and

Figure 14 is a flow diagram of an analysis model based on a slow rate of pressure loss in accordance with the tire pressure monitoring system shown in Figure 4.

Similar numerals refer to similar parts throughout the drawings.

Definitions

"ANN" or "Artificial Neural Network" is an adaptive tool for non-linear statistical data modeling that changes its structure based on external or internal information that flows through a network during a learning phase. ANN neural networks are non-linear statistical data modeling tools used to model complex relationships between inputs and outputs or to find patterns in data.

"Axial" and "axially" means lines or directions that are parallel to the axis of rotation of the tire.

"CAN bus" is an abbreviation for controller area network.

"Circumferential" means lines or directions extending along the perimeter of the surface of the annular tread perpendicular to the axial direction.

"Equatorial centerplane (CP)" means the plane perpendicular to the tire's axis of rotation and passing through the center of the tread.

"Footprint" means the contact patch or area of contact created by the tire tread with a flat surface as the tire rotates or rolls.

"Inboard side" means the side of the tire nearest the vehicle when the tire is mounted on a wheel and the wheel is mounted on the vehicle.

"Kalman filter" is a set of mathematical equations that implement a predictor-corrector type estimator that is optimal in the sense that it minimizes the estimated error covariance when some presumed conditions are met.

"Lateral" means an axial direction.

"Luenberger observer" is a state observer or estimation model. A "state observer" is a system that provide an estimate of the internal state of a given real system, from measurements of the input and output of the real system. It is typically computer-implemented, and provides the basis of many practical applications.

"MSE" is an abbreviation for mean square error, the error between and a measured signal and an estimated signal which the Kalman filter minimizes.

"Outboard side" means the side of the tire farthest away from the vehicle when the tire is mounted on a wheel and the wheel is mounted on the vehicle.

"Radial" and "radially" means directions radially toward or away from the axis of rotation of the tire.

Detailed Description of Example Embodiments of the Invention

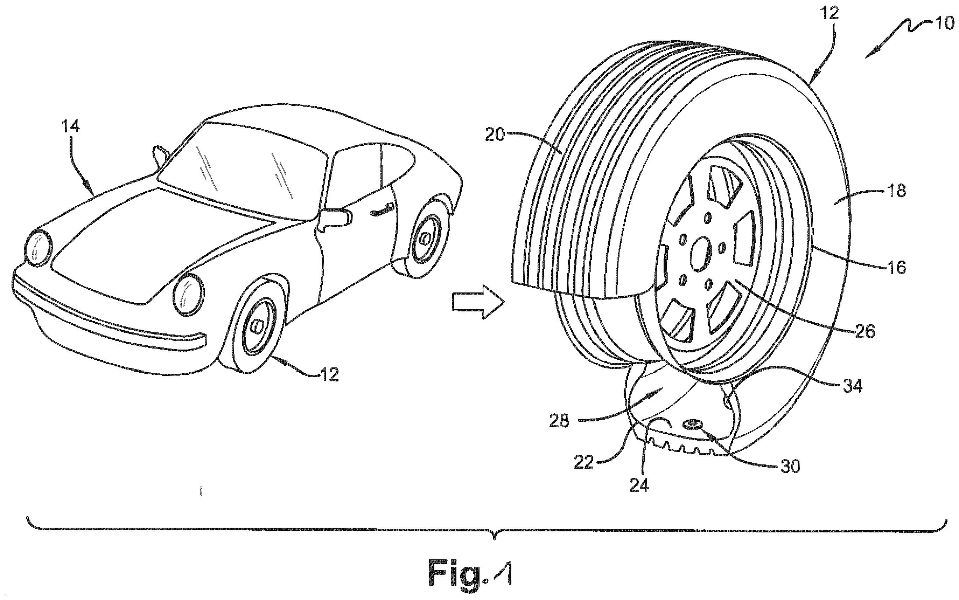

Turning now to Figures 1 through 14, an exemplary embodiment of the tire pressure monitoring system 10 of the present invention is indicated. With particular reference to Figure 1, the system 10 monitors the pressure in each tire 12 supporting a vehicle 14. While the vehicle 14 is depicted as a passenger car, the invention is not to be so restricted. The principles of the invention find application in other vehicle categories such as commercial trucks, off-the-road vehicles, and the like, in which vehicles may be supported by more or fewer tires. In addition, the invention finds application in a single vehicle 14 or in fleets of vehicles.

Each tire 12 includes a pair of bead areas 16 (only one shown) and a bead core (not shown) embedded in each bead area. Each one of a pair of sidewalls 18 (only one shown) extends radially outward from a respective bead area 16 to a ground-contacting tread 20. The tire 12 is reinforced by a carcass 22 that toroidally extends from one bead area 16 to the other bead area, as known to those skilled in the art. An innerliner 24 is formed on the inside surface of the carcass 22. The tire 12 is mounted on a wheel 26 in a manner known to those skilled in the art and, when mounted, forms an internal cavity 28 that is filled with a pressurized fluid, such as air.

A sensor unit 30 may be attached to the innerliner 24 of each tire 12 by means such as an adhesive and measures certain parameters of the tire, as will be described in greater detail below. It is to be understood that the sensor unit 30 may be attached in such a manner, or to other components of the tire 12, such as between layers of the carcass 22, on or in one of the sidewalls 18, on or in the tread 20, and/or a combination thereof. For the purpose of convenience, reference herein shall be made to mounting of the sensor unit 30 on the tire 12, with the understanding that mounting includes all such attachment.

The sensor unit 30 is mounted on each tire 12 for the purpose of detecting certain realtime tire parameters inside the tire, such as tire pressure and temperature. Preferably the sensor unit 30 is a tire pressure monitoring system (TPMS) module or sensor, of a type that is commercially available, and may be of any known configuration. For the purpose of convenience, the sensor unit 30 shall be referred to as a TPMS sensor. Each TPMS sensor 30 preferably also includes electronic memory capacity for storing identification (ID) information for each tire 12, known as tire ID information. Alternatively, tire ID information may be included in another sensor unit, or in a separate tire ID storage medium, such as a tire ID tag 34.

The tire ID information may include manufacturing information for the tire 12, such as: the tire type; tire model; size information, such as rim size, width, and outer diameter; manufacturing location; manufacturing date; a treadcap code that includes or correlates to a compound identification; and a mold code that includes or correlates to a tread structure identification. The tire ID information may also include a service history or other information to identify specific features and parameters of each tire 12, as well as mechanical characteristics of the tire, such as cornering parameters, spring rate, load-inflation relationship, and the like. Such tire identification enables correlation of the measured tire parameters and the specific tire 12 to provide local or central tracking of the tire, its current condition, and/or its condition over time. In addition, global positioning system (GPS) capability may be included in the TPMS sensor 30 and/or the tire ID tag 34 to provide location tracking of the tire 12 during transport and/or location tracking of the vehicle 14 on which the tire is installed.

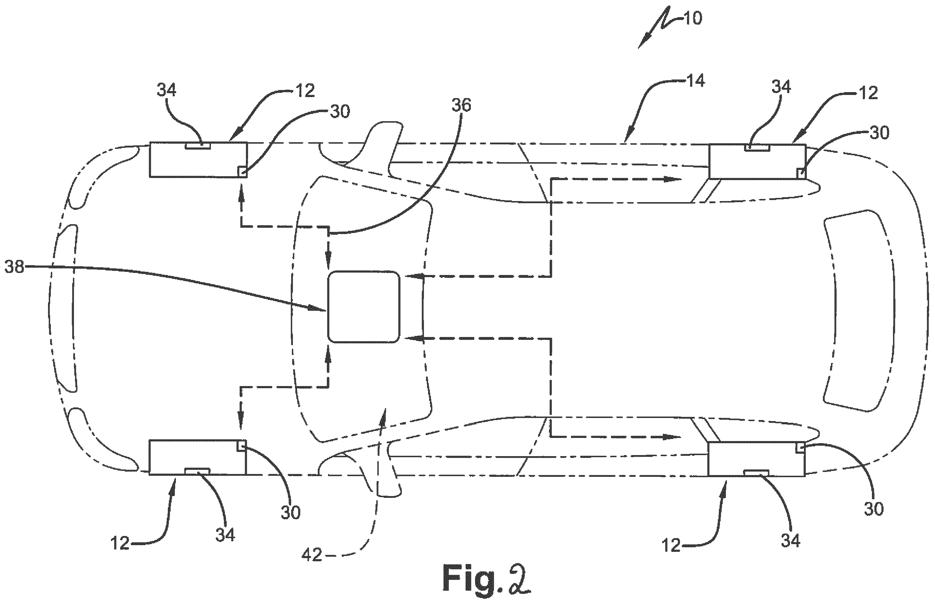

Turning now to Figure 2, the TMPS sensor 30 and the tire ID tag 34 each include an antenna for wireless transmission 36 of the measured tire pressure and temperature, as well as tire ID data, to a processor 38. The processor 38 may be mounted on the vehicle 14 as shown, or may be integrated into the TPMS sensor 30. For the purpose of convenience, the processor 38 will be described as being mounted on the vehicle 14, with the understanding that the processor may alternatively be integrated into the TPMS sensor 30. Preferably, the processor 38 is in electronic communication with or integrated into an electronic system of the vehicle 14, such as the vehicle CAN bus system 42, which is referred to as the CAN bus.

Aspects of the tire data information system 10 preferably are executed on the processor 38 or another processor that is accessible through the vehicle CAN bus 42, which enables input of data from the TMPS sensor 30 and the tire ID tag 34, as well as input of data from other sensors that are in electronic communication with the CAN bus. In this manner, the tire pressure monitoring system 10 enables direct measurement of tire pressure and temperature with the TPMS sensor 30, which preferably is transmitted to the processor 38. Tire ID information preferably is transmitted from the TPMS sensor 30 or the tire ID tag 34 to the processor 38. The processor 38 preferably correlates the measured tire pressure, the measured tire temperature, the measurement time, and ID information for each tire 12.

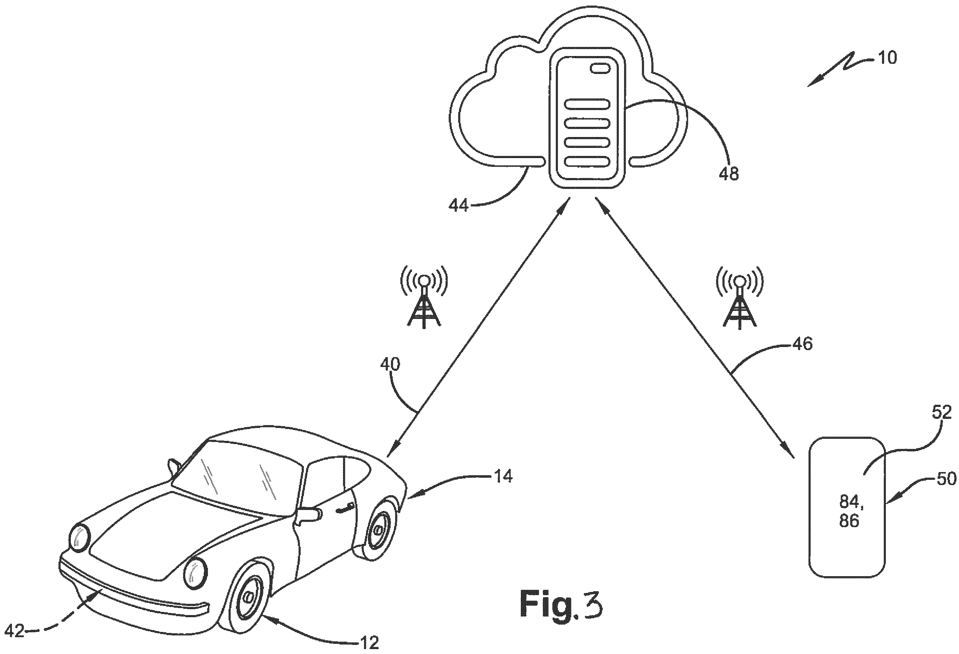

Referring to Figure 3, when the measured tire pressure, measured tire temperature, measurement time and ID information are correlated for each tire 12, the data may be wirelessly transmitted 40 from the processor 38 (Figure 2) and/or the CAN-bus 42 on the vehicle 14 to a remote processor 48, such as a processor in a cloud-based server 44. The cloud-based server 44 preferably executes a model 54 of the tire pressure monitoring system 10, which will be described in greater detail below. Output from the system 10 may be wirelessly transmitted 46 to a fleet management server 50 that includes a display 52 for showing output and/or notifications from the tire pressure monitoring system, as will be described in greater detail below.

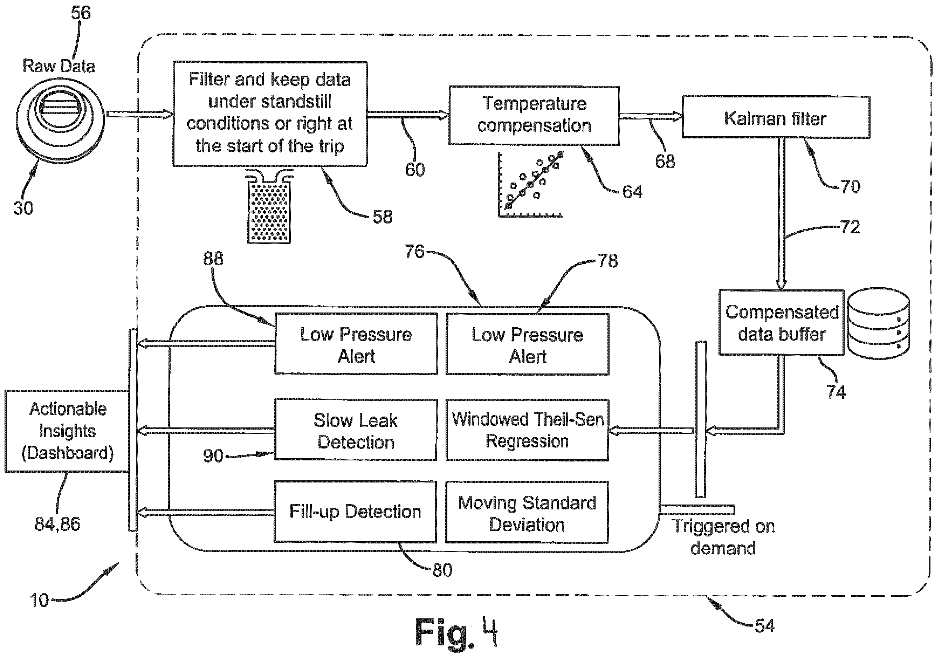

Turning to Figure 4, the tire pressure monitoring system 10 includes a tire pressure model 54, which receives tire data 56. The tire data 56 includes the above-described measured tire pressure, measured tire temperature, measurement time and ID information for each tire 12.

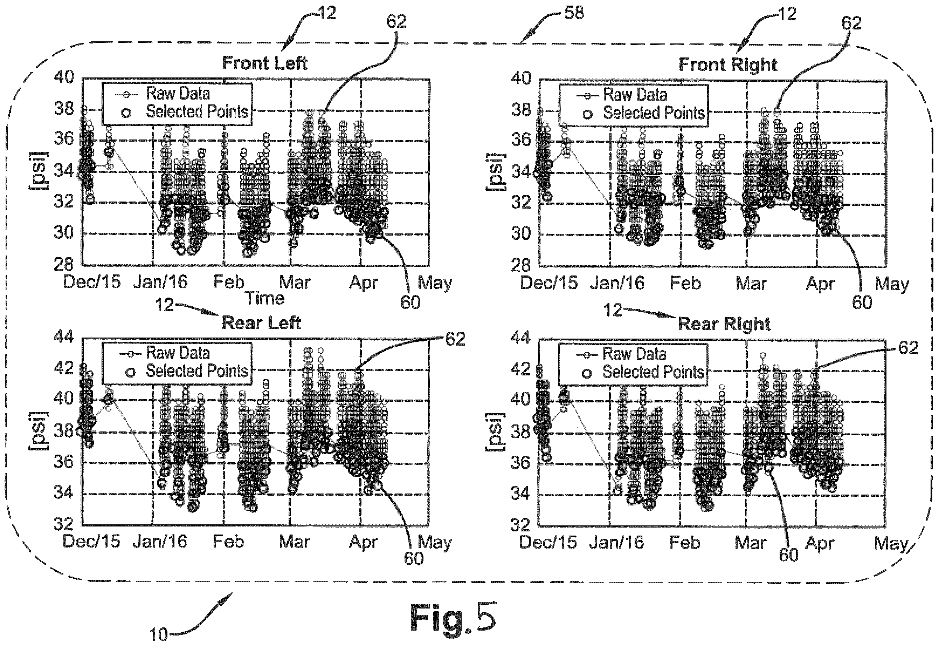

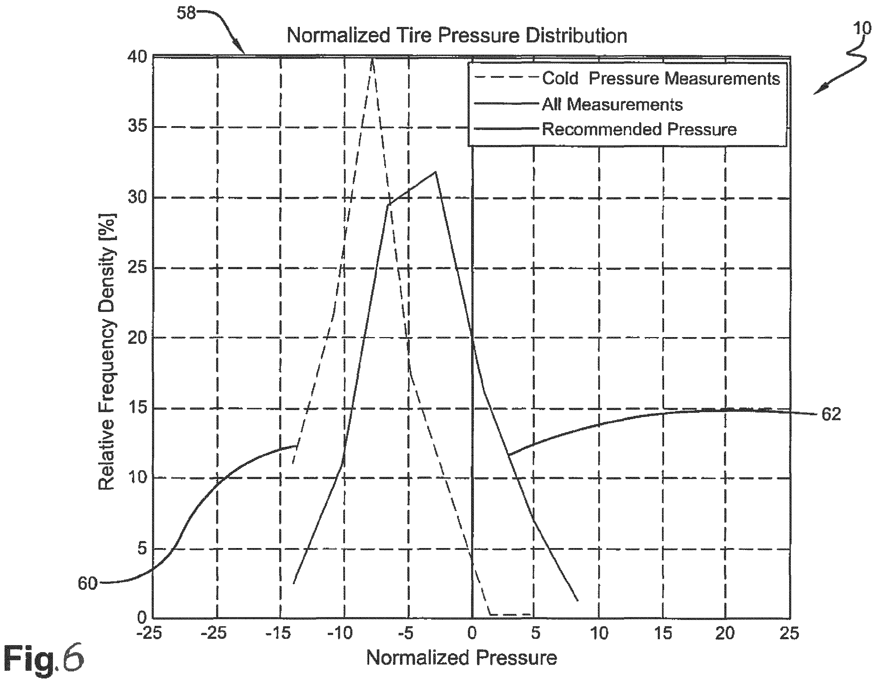

The tire pressure model 54 filters or extracts heat effects from the tire data 56 with a driving event extractor 58. With additional reference to Figure 5, the driving event extractor 58 extracts cold pressure data 60 from the raw pressure data 62. More particularly, due to heating effects of air in the tire cavity 28 (Figure 1) during operation of the vehicle 14, the cold tire pressures 60 are shifted lower than the distribution of all of the raw pressure data 62. As shown in Figure 6, the driving event extractor 58 thus removes heating effects of the raw pressure data 62 due to operation of the vehicle 14 to arrive at the cold pressure values 60. Any suitable data filtering technique may be employed by the driving event extractor 58 to extract the cold pressure data 60.

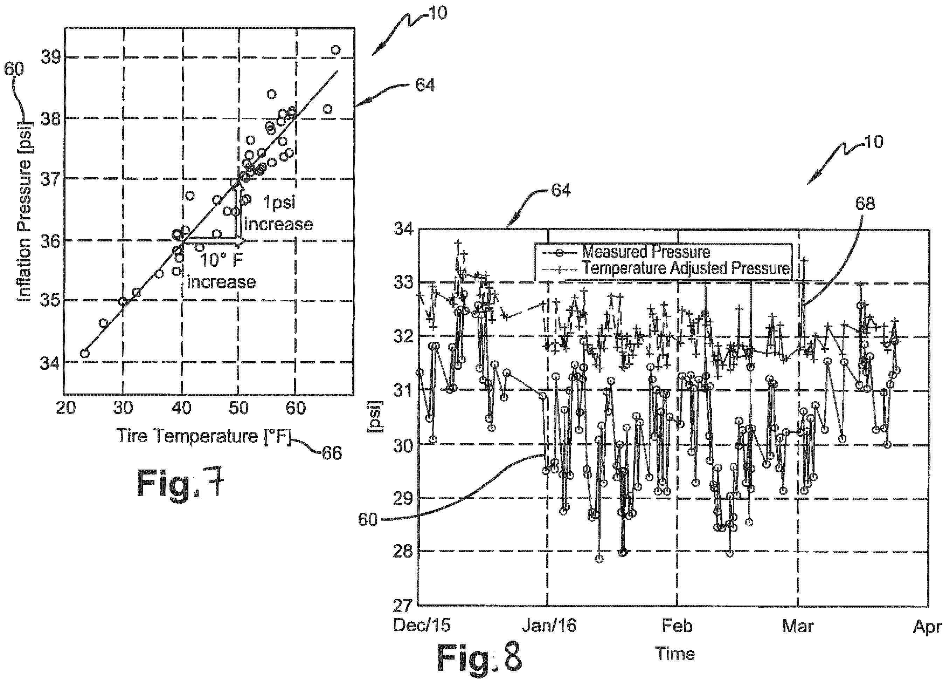

Returning to Figure 4, the tire pressure model 54 filters ambient temperature effects from the cold pressure data 60 with a temperature compensator 64. Ambient temperature affects the cold tire pressure 60, as reflected by a sensitivity shown in the graph of Figure 7, which yields about a one pound per square inch (psi) change (6894,76 pascal change) in cold pressure 60 for a 10-degree Fahrenheit change (10° C change) in a cold temperature 66 of the tire 12. Therefore, the cold pressure data 60 is adjusted to arrive at a compensated or adjusted cold tire pressure 68, as shown in Figure 8. An exemplary adjustment executed by the temperature compensator 64 includes calculating the compensated or adjusted cold tire pressure 68 as equal to the cold tire pressure 60 multiplied by a ratio of an adjusted tire temperature to the measured tire temperature 66:

$$P_{adjusted} = P_{measured} \left( \frac{T_{adjusted}}{T_{measured}} \right)$$

In this manner, the temperature compensator 64 generates the compensated cold tire pressure 68. It is to be understood that any suitable data compensation technique may be employed by the temperature compensator 64 to generate the compensated cold tire pressure 68.

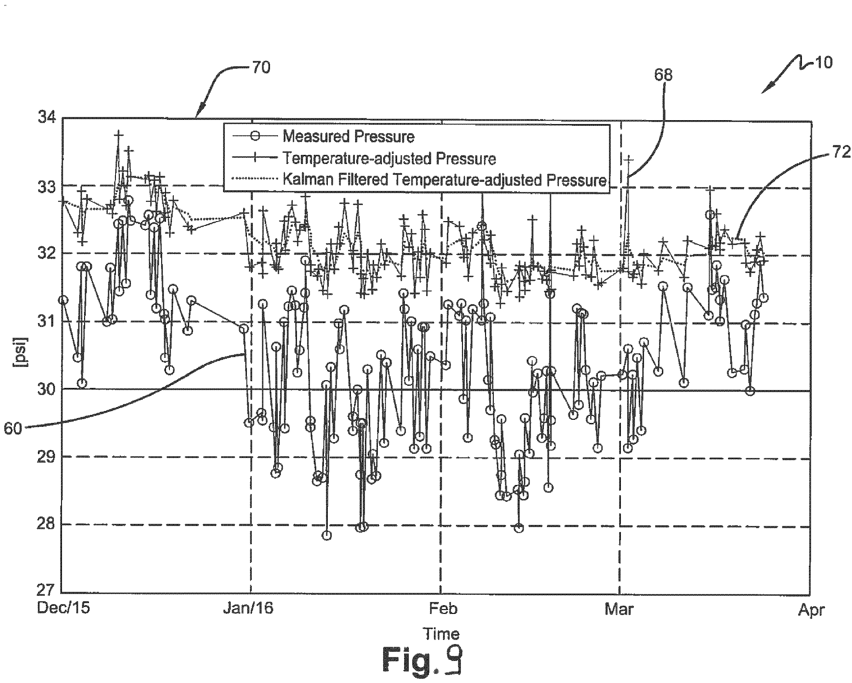

Returning to Figure 4, the tire pressure model 54 filters sensor noise from the compensated cold tire pressure 68 with a noise filter 70. More particularly, there may be unwanted variations, known as noise, in the data signal transmitted by the TPMS sensor 30. To improve the accuracy of the tire pressure data, and specifically the compensated cold tire pressure data 68, the variations or noise are filtered out of the data using the noise filter 70, which preferably includes a linear quadratic estimation or a Kalman filter. As shown in Figure 9, the noise filter 70 processes the compensated cold tire pressure data 68 using the Kalman filter and generates a filtered cold tire pressure 72.

Returning again to Figure 4, the filtered cold tire pressure data 72 may optionally be stored in an electronic storage means 74, such as a data buffer. The storage means 74 enables the filtered cold tire pressure data 72 to be stored for further analysis and/or historical archiving. Once the tire pressure model 54 extracts heat effects from the tire data 56 with the driving event extractor 58, filters ambient temperature effects from the cold pressure data 60 with the temperature compensator 64, and filters sensor noise from the compensated cold tire pressure 68 with the noise filter 70, a detection module 76 analyzes the filtered cold tire pressure 72 for data indicative of inflation or deflation of the tire 12.

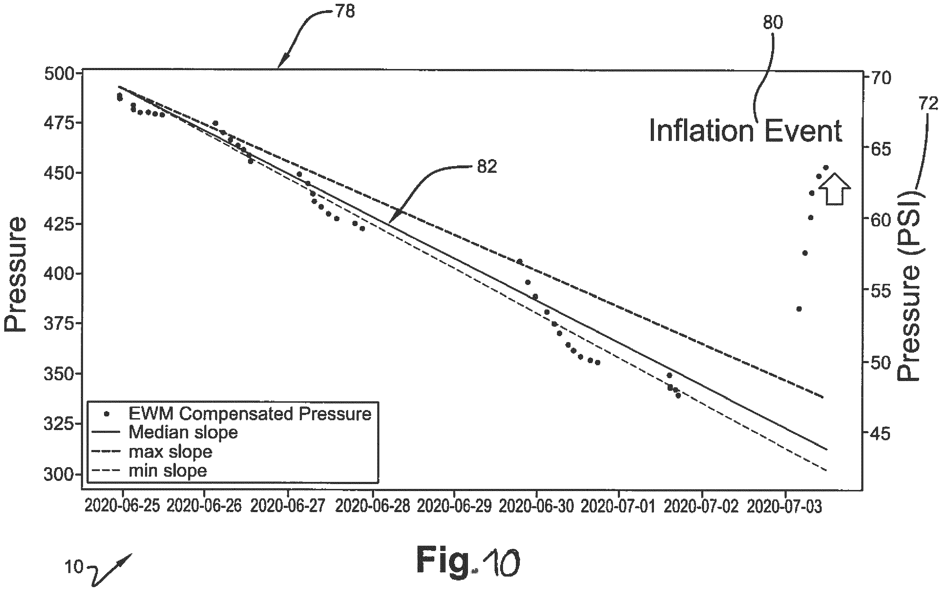

More particularly, the detection module 76 includes a comparator 78, which analyzes the filtered cold tire pressure data 72. As shown in Figure 10, the comparator 78 detects an inflation 80 of the tire 12 by comparing neighboring filtered cold tire pressure data values 72 to find local maxima. When an inflation 80 is detected, the tire pressure model 54 generates an inflation notification 84, as will be described in greater detail below.

The detection module 76 also determines whether a specific tire 12 has an air leak, and if so, the rate of the leak. More particularly, the detection module 76 converts time scale observations into an absolute scale, and executes a regression analysis to fit the filtered cold tire pressure data 72 with a robust regression. A slope 82 as the median of all slopes between paired values at a 95 percent confidence interval is determined, and equates to the air pressure leak rate of the tire 12.

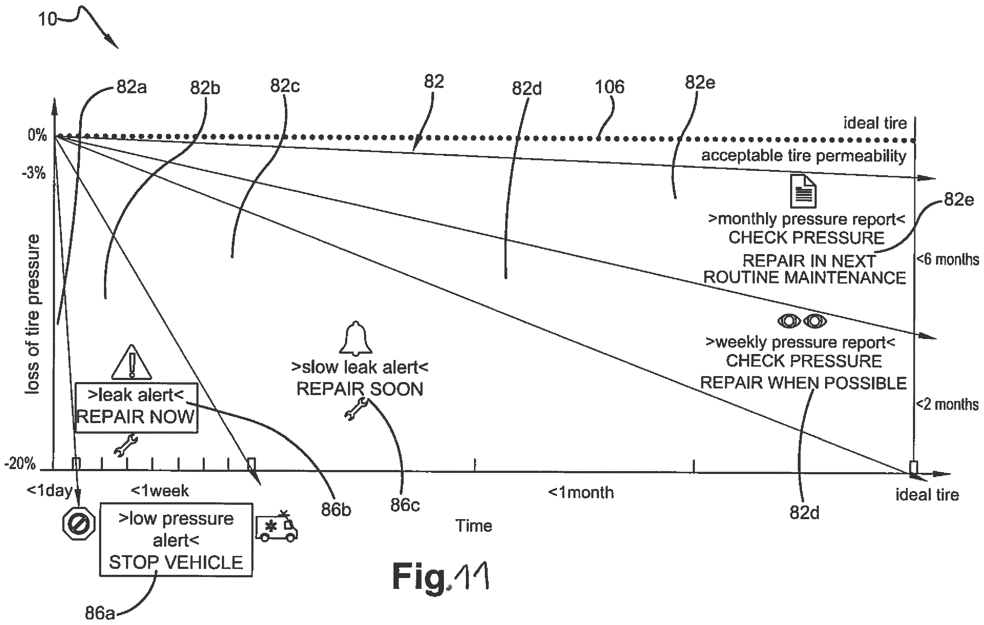

Referring to Figure 11, the air pressure leak rate 82 below a target air pressure 106 for the tire 12 dictates the type of a leak notification 86 that is generated by the system 10. For example, a first leak rate 82a includes an air pressure rate loss of more than 20 percent of the air in the tire 12 within a 24-hour or one day time period. The first leak rate 82a is considered to be a rapid leak rate and dictates a first leak notification 86a, which is to immediately stop the vehicle 14 for repair or replacement of the tire 12. A second leak rate 82b includes an air pressure rate loss of more than 20 percent of the air in the tire 12 during a time period that is between one day and one week. The second leak rate 82b dictates a second leak notification 86b to repair the tire 12 "now" or within the next day, enabling the vehicle 14 to be directed to a service center in a safe manner during an appropriate time window.

A third leak rate 82c includes an air pressure rate loss of more than 20 percent of the air in the tire 12 during a time period that is between one week and one month. The third leak rate 82c dictates a third leak notification 86c to repair the tire 12 "soon" or within the next week, enabling the vehicle 14 to be directed to a service center in a safe and convenient manner during an appropriate time window. A fourth leak rate 82d includes an air pressure rate loss of more than 20 percent of the air in the tire 12 during a time period that is between one month and two months. The fourth leak rate 82d dictates a fourth leak notification 86d to check and/or repair the tire 12 "when possible" or within the next several weeks, enabling the vehicle 14 to be scheduled for service during an appropriate time window.

A fifth third leak rate 82e includes an air pressure rate loss of more than 20 percent of the air in the tire 12 during a time period that is between two months and six months. The fifth leak rate 82e dictates a fifth leak notification 86e to check and/or repair the tire 12 "in next routine maintenance" or within the next month, enabling the tire to be checked during the next scheduled maintenance of the vehicle 14. The leak rate 82 and corresponding leak notification 86 may be adjusted depending on particular operating conditions for the tire 12 and/or service conditions for the vehicle 14, and thus may be different from the foregoing examples, without affecting the concept or operation of the invention.

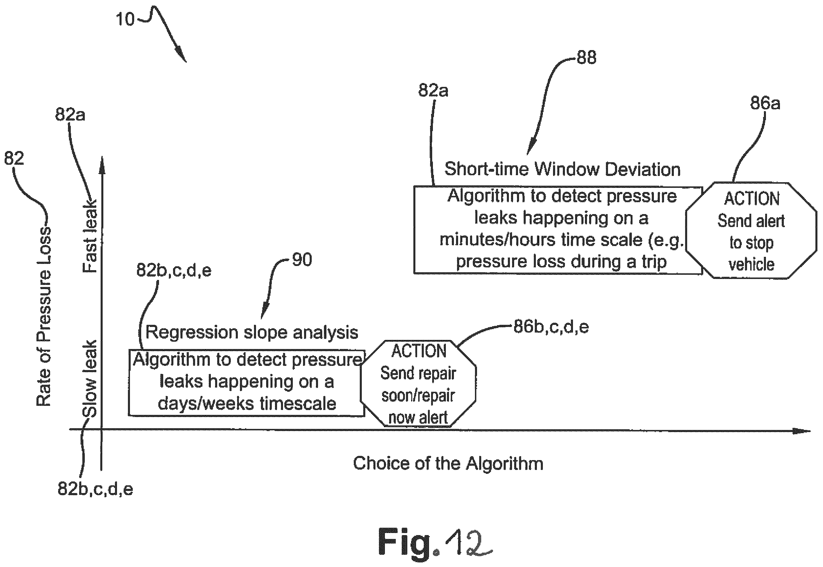

Turning to Figure 12, the air pressure leak rate 82 may also dictate the particular analysis technique to be employed, further increasing the accuracy of the tire pressure monitoring system 10. For example, for a rapid leak rate such as the first leak rate 82a, which may be an air pressure rate loss of more than 20 percent of the air in the tire 12 within a 24-hour time period, a rapid leak model 88 is employed. A preferred rapid leak model 88 is a short-time window deviation model. For a leak rate 82 that may be considered a slow leak, such as the second leak rate 82b, third leak rate 82c, fourth leak rate 82d and fifth leak rate 82e, which may be an air pressure rate loss of more than 20 percent of the air in the tire 12 during a time period that is between one day and several weeks or months, a slow leak model 90 is employed. A preferred slow leak model 90 includes a regression slope analysis technique.

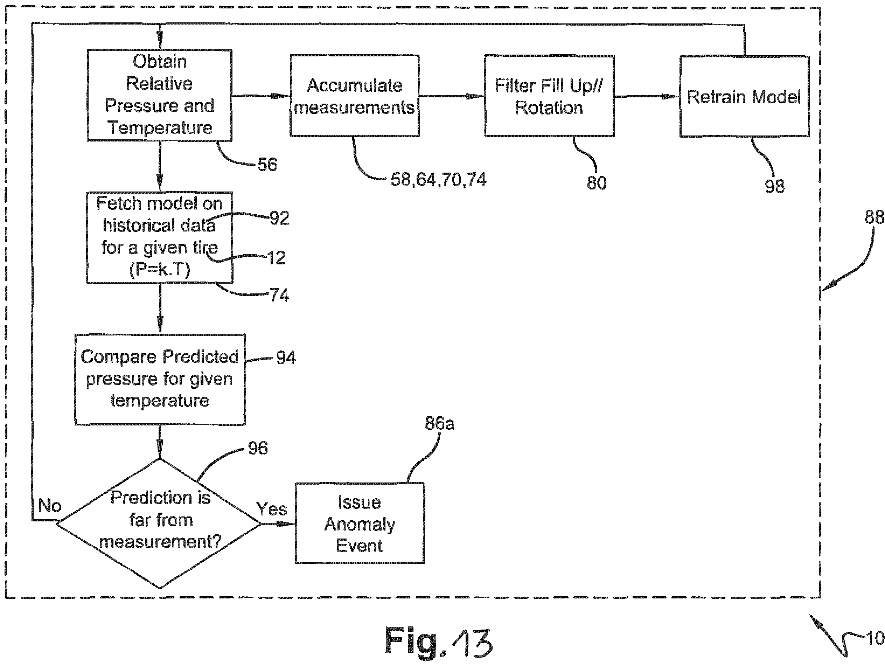

With reference to Figure 13, an exemplary rapid leak model 88 is shown. The rapid leak model 88 receives tire data 56. The driving event extractor 58 extracts heat effects from the tire data 56, the temperature compensator 64 filters ambient temperature effects, the noise filter 70 filters sensor noise, and the data buffer 74 stores the resulting filtered cold tire pressure data 72. The comparator 78 detects inflation 80 of the tire 12 and uses this information to continuously retrain the model 98. In addition, historical data 92 is retrieved from the data buffer 74.

According to the ideal gas law, the volume of the tire cavity 28 remains within a relatively small interval during operation of the tire 12, which may be modeled as a constant with a predetermined error. Once enough tire data 56 for the tire 12 has been gathered, the rapid leak model 88 executes a linear regression of the tire pressure data and compares a set of consecutive tire data to the model output 94. If a difference between the prediction from the linear regression and the tire data 56 is greater than a predetermined threshold amount 96, a rapid leak rate 82a is detected, and the first leak notification 86a to immediately stop the vehicle 14 is generated.

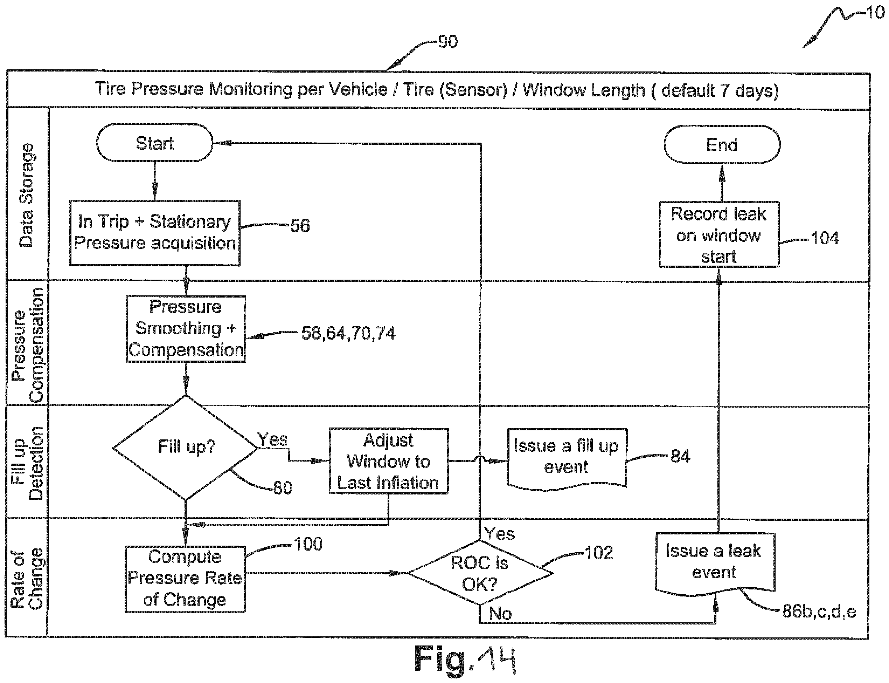

Turning to Figure 14, an exemplary slow leak model 90 is shown. The slow leak model 90 receives tire data 56. The driving event extractor 58 extracts heat effects from the tire data 56, the temperature compensator 64 filters ambient temperature effects, the noise filter 70 filters sensor noise, and the data buffer 74 stores the resulting filtered cold tire pressure data 72. The comparator 78 detects inflation 80 of the tire 12, and when inflation is detected, the inflation notification 84 is generated. When inflation 80 is not detected, the slow leak model 90 analyzes the filtered cold tire pressure data 72 with a regression slope analysis technique to determine a rate of pressure change 100 in the tire 12. The slow leak model 90 executes a verification 102 of the rate of pressure change 100, and an appropriate slow leak notification 86b, 86c, 86d or 86e for the rate of pressure change is generated.

Returning to Figures 3 and 4, the tire pressure model 54 generates an inflation notification 84 when inflation 80 is detected. When an air pressure leak in the tire 12 is detected, the tire pressure model 54 generates an appropriate leak notification 86 that corresponds to the leak rate 82. When a notification 84 or 86 is generated, the tire pressure monitoring system 10 preferably wirelessly transmits 46 the notification from the cloud-based server 44 to the fleet management server 50, which is shown on the display 52. Display of the notifications 84 and 86 enables a fleet manager viewing the display 52 to take preventative measures, such as instructing a vehicle operator to slow the vehicle 14 down, direct the vehicle to a service center, and/or schedule the vehicle for maintenance. The notifications 84 and 86 may also be transmitted to a device that is visible to the operator of the vehicle 14, thereby enabling the operator to take action based on the notification. In addition, as shown in Figures 3 and 14, the notifications 84 and 86 may be recorded 104 in the cloud-based server 44 for future analysis.

In this manner, the tire pressure monitoring system 10 obtains tire pressure data 56, extracts heat effects from the tire data, filters ambient temperature effects, filters sensor noise, detects inflation of the tire 12, and detects an air pressure leak in the tire. When the system 10 detects inflation 80 of the tire 12, an inflation notification 84 is generated. When the system 10 detects an air pressure leak in the tire 12, the system determines with precision if a rapid air pressure leak or a slow air pressure leak in each tire 12 is present and generates a corresponding leak notification 86. By distinguishing between a rapid leak condition 82a and slow leak conditions 82b, 82c, 82d and 82e, the tire pressure monitoring system 10 enables a fleet manager to take appropriate action based upon the condition according to a fleet maintenance schedule, rather than unnecessarily removing the vehicle 14 from immediate service.

The present invention also includes a method of monitoring tire pressure. The method includes steps in accordance with the description that is presented above and shown in Figures 1 through 14.

**Claims**

1. A tire pressure monitoring system for monitoring the pressure in at least one tire (12) supporting a vehicle (14), the system (10) comprising:

   at least one sensor (30) mounted on the at least one tire (12) for measuring a pressure and a temperature of the at least one tire (12);
   means for transmitting the measured pressure data (62) and temperature data to a processor (38, 48); **characterized in that**
   a tire pressure model (54) being executed on the processor (38, 48), the tire pressure model (54) including:

      a driving event extractor (56) to extract cold pressure data (60) from the measured pressure data (62);
      a temperature compensator (64) to generate a compensated cold tire pressure (68) from the cold pressure data (60);
      a noise filter (70) to filter sensor noise and generate a filtered cold tire pressure (72) from the compensated cold tire pressure (68);
      a detection module (76) receiving the filtered cold tire pressure (72) and determining an air pressure leak rate of the at least one tire (12); and
      a leak notification (86) corresponding to the air pressure leak rate generated by the tire pressure model (54).

2. The tire pressure monitoring system of claim 1, further comprising an electronic memory capacity in the at least one sensor (30) or in a unit mounted on the at least one tire (12), the electronic memory capacity for storing tire identification information, and means for transmitting the tire identification information to the processor (38, 48), wherein the tire pressure model (54) receives the tire identification information.

3. The tire pressure monitoring system of claim 1 or 2, wherein the compensated cold tire pressure (68) generated by the temperature compensator (64) is equal to a cold tire pressure multiplied by a ratio of an adjusted tire temperature to a measured tire temperature.

4. The tire pressure monitoring system of at least one of the previous claims, wherein the noise filter (70) includes a linear quadratic estimation or a Kalman filter.

5. The tire pressure monitoring system of at least one of the previous claims, wherein the detection module (76) detects an inflation of the at least one tire (12), and, optionally, wherein the inflation of the at least one tire is determined by comparing neighboring filtered cold tire pressure data values to find local maxima.

6. The tire pressure monitoring system of claim 5, further comprising an inflation notification (84) generated by the tire pressure model (54) when the detection module (76) detects inflation of the at least one tire (12).

7. The tire pressure monitoring system of at least one of the previous claims, wherein the detection module (76) executes a regression analysis to determine the air pressure leak rate of the at least one tire (12) and/or wherein the detection module (76) executes a rapid leak model (88) when the air pressure leak rate includes an air pressure rate loss of more than 20 percent of the air in the at least one tire (12) within a 24-hour time period, the rapid leak model (88) optionally further including a short-time window deviation model.

8. The tire pressure monitoring system of at least one of the previous claims, wherein the detection module (76) executes a slow leak model (90) when the air pressure leak rate includes an air pressure rate loss of more than 20 percent of the air in the at least one tire (12) during a time period that is between one day and at least multiple weeks, the slow leak model (90) optionally further including a regression slope analysis.

9. The tire pressure monitoring system of at least one of the previous claims, wherein when the air pressure leak rate includes an air pressure rate loss of more than 20 percent of the air in the at least one tire (12) within a 24-hour time period the leak notification includes a first leak notification (82a) to immediately stop the vehicle (14), and, optionally, wherein when the air pressure leak rate includes an air pressure rate loss of more than 20 percent of the air in the at least one tire (12) during a time period that is between one day and one week, the leak notification includes a second leak notification (82b).

10. The tire pressure monitoring system of claim 9, wherein when the air pressure leak rate includes an air pressure rate loss of more than 20 percent of the air in the at least one tire (12) during a time period that is between one week and one month, the leak notification includes a third leak notification (82c), and, optionally, wherein when the air pressure leak rate includes an air pressure rate loss of more than 20 percent of the air in the at least one tire (12) during a time period that is between one month and two months, the leak notification includes a fourth leak notification (82d).

11. The tire pressure monitoring system of claim 10, wherein when the air pressure leak rate includes an air pressure rate loss of more than 20 percent of the air in the at least one tire (12) during a time period that is between two months and six months, the leak notification includes a fifth leak notification (82e).

12. The tire pressure monitoring system of at least one of the previous claims, further comprising a data buffer to store filtered cold tire pressure data.

13. The tire pressure monitoring system of at least one of the previous claims, wherein the processor includes at least one of a vehicle-mounted processor (38) and a remote processor (48).

14. The tire pressure monitoring system of at least one of the previous claims, wherein the tire pressure monitoring system (10) is configured to transmit the notification to a fleet management server (50).

15. A method for monitoring the pressure in at least one tire (12) supporting a vehicle (14), preferably by using a system in accordance with at least one of the previous claims, the method comprising:

   providing at least one sensor (30) mounted on the at least one tire (12), the at least one sensor (30) measuring a pressure and a temperature of the at least one tire;
   providing means for transmitting the measured pressure data and temperature data to a processor (38, 48);

providing a tire pressure model (54) being executed on the processor (38, 48), the tire pressure model (54) including:

a driving event extractor (56) to extract cold pressure data (60) from the measured pressure data (62);

a temperature compensator (64) to generate a compensated cold tire pressure (68) from the cold pressure data;

a noise filter (70) to filter sensor noise and generate a filtered cold tire pressure (72) from the compensated cold tire pressure;

providing a detection module (76), the detection module (76) receiving the filtered cold tire pressure and determining an air pressure leak rate of the at least one tire (12); and

providing a leak notification (86) corresponding to the air pressure leak rate generated by the tire pressure model (54).

**Patentansprüche**

1. System zur Überwachung des Drucks eines Luftreifens, das dazu bestimmt ist, den Druck in mindestens einem Luftreifen (12) zu überwachen, der ein Fahrzeug (14) trägt; wobei das System (10) das Folgende umfasst:

mindestens einen Sensor (30), der an dem mindestens einen Luftreifen angebracht ist, um einen Druck und eine Temperatur des mindestens einen Luftreifens (12) zu messen;

ein Mittel zum Übertragen der gemessenen Druck- (62) und Temperaturdaten an einen Prozessor (38, 48); **dadurch gekennzeichnet, dass** :

ein Reifendruckmodell (54) auf dem Prozessor (38, 48) ausgeführt wird; wobei das Reifendruckmodell (54) Folgendes umfasst:

eine Vorrichtung zum Extrahieren von Fahrereignissen (56), die dazu bestimmt ist, Kaltdruckdaten (60) aus den gemessenen Druckdaten (62) zu extrahieren;

eine Vorrichtung zum Temperaturausgleich (64), die dazu bestimmt ist, einen kompensierten Kaltdruck (68) des Luftreifens aus den Kaltdruckdaten (60) zu erzeugen;

einen Störungsfilter (70), der dazu bestimmt ist, Sensorstörungen zu filtern und einen gefilterten Kaltdruck (72) des Luftreifens aus dem kompensierten Kaltdruck (68) des Reifens zu erzeugen;

ein Sensormodul (76), das den gefilterten Kaltdruck (72) des Reifens empfängt und ein Niveau des Luftdruckverlusts des mindestens einen Reifens (12) bestimmt; und eine Leckmeldung (86), die dem Niveau des Luftdruckverlusts entspricht, die durch das Druckmodell des Luftreifens (54) erzeugt wird.

2. System zur Überwachung des Drucks eines Luftreifens nach Anspruch 1, das ferner eine elektronische Speicherkapazität in dem mindestens einen Sensor (30) oder in einer Einheit, die an dem mindestens einen Reifen (12) angebracht ist; wobei die elektronische Speicherkapazität dazu bestimmt ist, Informationen bezüglich der Reifenidentifikation zu speichern, sowie ein Mittel zum Übertragen der Informationen bezüglich der Reifenidentifikation an den Prozessor (38, 48) umfasst; wobei das Reifendruckmodell (54) die Informationen bezüglich der Reifenidentifikation empfängt.

3. System zur Überwachung des Drucks eines Luftreifens nach Anspruch 1 oder 2, wobei der von der Vorrichtung zum Temperaturausgleich (64) erzeugte kompensierte Kaltdruck (68) des Reifens gleich einem Kaltdruck des Reifens ist, der mit einem Verhältnis zwischen einer eingestellten Temperatur des Reifens und einer gemessenen Temperatur des Reifens multipliziert wird.

4. System zur Überwachung des Drucks eines Luftreifens nach mindestens einem der vorhergehenden Ansprüche, wobei der Störungsfilter (70) eine linearquadratische Schätzung oder einen Kalman-Filter umfasst.

5. System zur Überwachung des Drucks eines Luftreifens nach mindestens einem der vorhergehenden Ansprüche, wobei das Sensormodul (76) ein Aufpumpen des mindestens einen Reifens (12) erfasst; und optional, wobei das Aufpumpen des mindestens einen Reifens durch einen Vergleich benachbarter gefilterter Werte von Reifendruckkaltdaten bestimmt wird, mit dem Ziel, lokale Maxima zu erfassen.

6. System zur Überwachung des Drucks eines Luftreifens nach Anspruch 5, das ferner eine Aufpumpmeldung (84) umfasst, die von dem Reifendruckmodell (54) erzeugt wird, wenn das Sensormodul (76) ein Aufpumpen des mindestens einen Reifens (12) erfasst.

7. System zur Überwachung des Drucks eines Reifens nach mindestens einem der vorhergehenden Ansprüche, wobei das Sensormodul (76) eine Regressionsanalyse durchführt, um das Niveau des Luftdruckverlusts des mindestens einen Reifens (12) zu bestimmen, und/oder wobei das Sensormodul (76) ein schnelles Leckmodell (88) durchführt, wenn das Niveau des Luftdruckverlusts einen Verlust des Luftdruckniveaus umfasst, der mehr als 20 % der Luft in dem mindestens einen Reifen (12) innerhalb eines Zeitraums von 24 Stunden beträgt; wobei das schnelle Leckmodell (88) optional zusätzlich ein Ablenkungsmodell mit sehr kurzem Verzögerungsfenster umfasst.

8. System zur Überwachung des Drucks eines Luftreifens nach mindestens einem der vorhergehenden Ansprüche, wobei das Sensormodul (76) ein langsames Leckmodell (90) ausführt, wenn das Niveau des Luftdruckverlusts einen Verlust des Luftdruckniveaus umfasst, der mehr als 20 % der Luft in dem mindestens einen Reifen (12) innerhalb eines Zeitraums zwischen einem Tag und mindestens mehreren Wochen beträgt; wobei das langsame Leckmodell (90) optional zusätzlich eine Analyse der Regressionsneigung umfasst.

9. System zur Überwachung des Drucks eines Luftreifens nach mindestens einem der vorhergehenden Ansprüche, wobei, wenn das Niveau des Luftdruckverlusts einen Verlust des Luftdruckniveaus umfasst, der mehr als 20 % der Luft in dem mindestens einen Reifen (12) innerhalb eines Zeitraums von 24 Stunden beträgt, die Leckmeldung eine erste Leckmeldung (82a) umfasst, die dazu bestimmt ist, das Fahrzeug (14) sofort anzuhalten; und wobei, optional, wenn das Niveau des Luftdruckverlusts einen Verlust des Luftdruckniveaus umfasst, der mehr als 20 % der Luft in dem mindestens einen Luftreifen (12) innerhalb eines Zeitraums von einem Tag bis zu einer Woche beträgt, die Leckmeldung eine zweite Leckmeldung (82b) umfasst.

10. System zur Überwachung des Drucks eines Luftreifens nach Anspruch 9, wobei, wenn das Niveau des Luftdruckverlusts einen Verlust des Luftdruckniveaus umfasst, der mehr als 20 % der Luft in dem mindestens einen Reifen (12) innerhalb eines Zeitraums von einer Woche bis zu einem Monat beträgt, die Leckmeldung eine dritte Leckmeldung (82c) umfasst; und wobei, optional, wenn das Niveau des Luftdruckverlusts einen Verlust des Luftdruckniveaus umfasst, der mehr als 20% der Luft in dem mindestens einen Luftreifen (12) innerhalb eines Zeitraums von einem Monat bis zwei Monaten beträgt, die Leckmeldung eine vierte Leckmeldung (82d) umfasst.

11. Reifen-Drucküberwachungssystem nach Anspruch 10, wobei, wenn das Niveau des Luftdruckverlusts einen Verlust des Luftdruckniveaus umfasst, der mehr als 20% der Luft in dem mindestens einen Reifen (12) innerhalb eines Zeitraums von zwei Monaten bis sechs Monaten beträgt, die Leckmeldung eine fünfte Leckmeldung (82e) umfasst.

12. System zur Überwachung des Drucks eines Luftreifens nach mindestens einem der vorhergehenden Ansprüche, das ferner ein Datenpufferregister umfasst, das dazu bestimmt ist, gefilterte Daten des Kaltdrucks des Luftreifens zu speichern.

13. System zur Überwachung des Drucks eines Reifens nach mindestens einem der vorhergehenden Ansprüche, wobei der Prozessor mindestens einen Prozessor umfasst, der aus einem in dem Fahrzeug angebrachten Prozessor (38) und einem Fernprozessor (48) ausgewählt ist.

14. System zur Überwachung des Drucks eines Luftreifens nach mindestens einem der vorhergehenden Ansprüche, wobei das System zur Überwachung des Drucks eines Luftreifens (10) so konfiguriert ist, dass es die Meldung an einen Flottenmanagementserver (50) weiterleitet.

15. Verfahren zum Überwachen des Drucks in mindestens einem Luftreifen (12), der ein Fahrzeug (14) trägt, vorzugsweise unter Verwendung eines Systems in Übereinstimmung mit mindestens einem der vorhergehenden Ansprüche, wobei das Verfahren das Folgende umfasst;

das Bereitstellen mindestens eines Sensors (30), der an dem mindestens einen Luftreifen angebracht ist; wobei der mindestens eine Sensor (30) einen Druck und eine Temperatur des mindestens einen Reifens misst;
das Bereitstellen von einem Mittel zum Übertragen der gemessenen Druck- und Temperaturdaten an einen Prozessor (38, 48);
das Bereitstellen eines Reifendruckmodells (54), das auf dem Prozessor (38, 48) ausgeführt wird; wobei das Reifendruckmodell (54) das Folgende umfasst:

eine Vorrichtung zum Extrahieren von Fahrereignissen (56), die dazu bestimmt ist, Kaltdruckdaten (60) aus den gemessenen Druckdaten (62) zu extrahieren;
eine Vorrichtung zum Temperaturausgleich (64), die dazu bestimmt ist, einen kompensierten Kaltdruck (68) des Luftreifens aus den Kaltdruckdaten zu erzeugen;
einen Störungsfilter (70), der dazu bestimmt ist, Sensorstörungen zu filtern und einen gefilterten Kaltdruck (72) des Luftreifens aus dem kompensierten Kaltdruck (68) des Reifens zu erzeugen;
das Bereitstellen eines Sensormoduls (76);
wobei das Sensormodul (76) den gefilterten Kaltdruck des Reifens empfängt und ein Niveau des Luftdruckverlustes des mindestens einen Luftreifens (12) bestimmt; und das Bereitstellen einer Leckmeldung (86), die dem Niveau des Luftdruckverlusts entspricht, die durch das Druckmodell des Luftreifens (54) erzeugt wird.

## Revendications

1. Système de surveillance de la pression d'un bandage pneumatique, qui est destiné à la surveillance de la pression présente dans au moins un bandage pneumatique (12) qui supporte un véhicule (14) ; dans lequel le sysème (10) comprend :

   au moins un capteur (30) qui est monté sur ledit au moins un bandage pneumatique pour mesurer une pression et une température dudit au moins un bandage pneumatique (12) ; un moyen destiné à transmettre les données de pression (62) et de température mesurées à un processeur (38, 48) ; **caractérisé en ce que** :

   un modèle de pression de bandage pneumatique (54) est exécuté sur le processeur (38, 48) ; dans lequel le modèle de pression de bandage pneumatique (54) englobe : un dispositif d'extraction d'événement de roulage (56) qui est destiné à extraire des données de pression à froid (60) à partir des données de pression mesurées (62) ; un dispositif de compensation de température (64) destiné à générer une pression à froid compensée (68) du bandage pneumatique à partir des données de pression à froid (60) ; un filtre antiparasites (70) destiné à filtrer les parasites du capteur et à générer une pression à froid filtrée (72) du bandage pneumatique à partir de la pression à froid compensée (68) du bandage pneumatique ; un module de détection (76) qui reçoit la pression à froid filtrée (72) du bandage pneumatique et qui détermine un niveau de perte de pression de l'air dudit au moins un bandage pneumatique (12) ; et une notification de fuite (86) qui correspond au niveau de perte de pression d'air, générée par le modèle de pression de bandage pneumatique (54).

2. Système de surveillance de la pression d'un bandage pneumatique selon la revendication 1, qui comprend en outre une capacité de mémoire électronique dans ledit au moins un capteur (30) ou dans une unité qui est montée sur ledit au moins un bandage pneumatique (12) ; dans lequel la capacité de mémoire électronique est destinée à mémoriser des informations concernant l'identification du bandage pneumatique, ainsi qu'un moyen destiné à transmettre au processeur (38, 48) les informations concernant l'identification du bandage pneumatique ; dans lequel le modèle de pression de bandage pneumatique (54) reçoit les informations concernant l'identification du bandage pneumatique.

3. Système de surveillance de la pression d'un bandage pneumatique selon la revendication 1 ou 2, dans lequel la pression à froid compensée (68) du bandage pneumatique générée par le dispositif de compensation de température (64) est égale à une pression à froid du bandage pneumatique multipliée par un rapport entre une température ajustée du bandage pneumatique et une température mesurée du bandage pneumatique.

4. Système de surveillance de la pression d'un bandage pneumatique selon au moins une des revendications précédentes, dans lequel le filtre antiparasites (70) englobe une estimation linéairequadratique ou un filtre de Kalman.

5. Système de surveillance de la pression d'un bandage pneumatique selon au moins une des revendications précédentes, dans lequel le module de détection (76) détecte un gonflage dudit au moins un bandage pneumatique (12) ; et, de manière facultative, dans lequel le gonflage dudit au moins un bandage pneumatique est déterminé par l'intermédiaire d'une comparaison de valeurs filtrées voisines de données de pression à froid de bandages pneumatiques dans le but de détecter des maxima locaux.

6. Système de surveillance de la pression d'un bandage pneumatique selon la revendication 5, qui comprend en outre une notification de gonflage (84) générée par le modèle de pression de bandage pneumatique (54) lorsque le module de détection (76) détecte un gonflage dudit au moins un bandage pneumatique (12).

7. Système de surveillance de la pression d'un bandage pneumatique selon au moins une des revendications précédentes, dans lequel le module de détection (76) exécute une analyse de régression dans le but de déterminer le niveau de perte de pression de l'air dudit au moins un bandage pneumatique (12) et/ou dans lequel le module de détection (76) exécute un modèle de fuite rapide (88) lorsque le niveau de perte de pression de l'air englobe une perte de niveau de pression de l'air qui est supérieure à 20 % de l'air présent dans ledit au moins un bandage pneumatique (12) au cours d'un laps de temps de 24 heures ; dans lequel le modèle de fuite rapide (88) englobe en outre, de manière facultative, un modèle de déviation à fenêtre de délai très court.

8. Système de surveillance de la pression d'un bandage pneumatique selon au moins une des revendications précédentes, dans lequel le module de détection (76) exécute un modèle de fuite lente (90) lorsque le niveau de perte de pression de l'air englobe une perte de niveau de pression de l'air qui est supérieure à 20 % de l'air présent dans ledit au moins un bandage pneumatique (12) au cours d'un laps de temps qui se situe entre un jour et au moins plusieurs semaines ; dans lequel le modèle de fuite lente (90) englobe en outre, de manière facultative, une analyse de la pente de régression.

9. Système de surveillance de la pression d'un bandage pneumatique selon au moins une des revendications précédentes, dans lequel, lorsque le niveau de perte de pression de l'air englobe une perte de niveau de pression de l'air qui est supérieure à 20 % de l'air présent dans ledit au moins un bandage pneumatique (12) au cours d'un laps de temps de 24 heures, la notification de fuite englobe une première notification de fuite (82a) qui est destinée à stopper immédiatement le véhicule (14) ; et, dans lequel, de manière facultative, lorsque le niveau de perte de pression de l'air englobe une perte de niveau de pression de l'air qui est supérieure à 20 % de l'air présent dans ledit au moins un bandage pneumatique (12) au cours d'un laps de temps qui se situe entre un jour et une semaine, la notification de fuite englobe une deuxième notification de fuite (82b).

10. Système de surveillance de la pression d'un bandage pneumatique selon la revendication 9, dans lequel, lorsque le niveau de perte de pression de l'air englobe une perte de niveau de pression de l'air qui est supérieure à 20 % de l'air présent dans ledit au moins un bandage pneumatique (12) au cours d'un laps de temps qui se situe entre une semaine et un mois, la notification de fuite englobe une troisième notification de fuite (82c) ; et, dans lequel, de manière facultative, lorsque le niveau de perte de pression de l'air englobe une perte de niveau de pression de l'air qui est supérieure à 20 % de l'air présent dans ledit au moins un bandage pneumatique (12) au cours d'un laps de temps qui se situe entre un mois et deux mois, la notification de fuite englobe une quatrième notification de fuite (82d).

11. Système de surveillance de la pression d'un bandage pneumatique selon la revendication 10, dans lequel, lorsque le niveau de perte de pression de l'air englobe une perte de niveau de pression de l'air qui est supérieure à 20 % de l'air présent dans ledit au moins un bandage pneumatique (12) au cours d'un laps de temps qui se situe entre deux mois et six mois, la notification de fuite englobe une cinquième notification de fuite (82e).

12. Système de surveillance de la pression d'un bandage pneumatique selon au moins une des revendications précédentes, qui comprend en outre un registre tampon des données, qui est destiné à enregistrer des données filtrées de la pression à froid du bandage pneumatique.

13. Système de surveillance de la pression d'un bandage pneumatique selon au moins une des revendications précédentes, dans lequel le processeur englobe au moins un processeur choisi parmi un processeur monté à bord d'un véhicule (38) et un processeur à distance (48).

14. Système de surveillance de la pression d'un bandage pneumatique selon au moins une des revendications précédentes, dans lequel le système (10) de surveillance de la pression d'un bandage pneumatique est configuré pour transmettre la notification à un serveur de gestion de flotte (50).

15. Procédé destiné à la surveillance de la pression présente dans au moins un bandage pneumatique (12) qui supporte un véhicule (14), de préférence en utilisant un système en conformité avec au moins une des revendications précédentes, le procédé comprenant le fait de ;

procurer au moins un capteur (30) qui est monté sur ledit au moins un bandage pneumatique ; dans lequel ledit au moins un capteur (30) mesure une pression et une température dudit au moins un bandage pneumatique ;
procurer un moyen destiné à transmettre les données de pression et de température mesurées à un processeur (38, 48) ;
procurer un modèle de pression de bandage pneumatique (54) qui est exécuté sur le processeur (38, 48) ; dans lequel le modèle de pression de bandage pneumatique (54) englobe :

un dispositif d'extraction d'événement de roulage (56) qui est destiné à extraire des données de pression à froid (60) à partir des données de pression mesurées (62) ;
un dispositif de compensation de température (64) destiné à générer une pression à froid compensée (68) du bandage pneumatique à partir des données de pression à froid ;
un filtre antiparasites (70) destiné à filtrer les parasites du capteur et à générer une pression à froid filtrée (72) du bandage pneumatique à partir de la pression à froid compensée du bandage pneumatique ;
procurer un module de détection (76) ; dans lequel , le module de détection (76) reçoit la pression à froid filtrée du bandage pneumatique et détermine un niveau de perte de pression de l'air présent dans ledit au moins un bandage pneumatique (12) ; et
procurer une notification de fuite (86) qui correspond au niveau de perte de pression d'air, générée par le modèle de pression de bandage pneumatique (54).

Fig. 1

**Fig.2**

EP 4 140 783 B1

Fig.3

**Fig. 4**

Fig.5

Fig.6

EP 4 140 783 B1

Fig. 8

Fig. 7

Fig. 9

Fig. 10

**Fig. 11**

loss of tire pressure

0%
-3%
-20%

ideal tire
acceptable tire permeability

Time
<1day
<1week
<1month
<2 months
<6 months

ideal tire

10

82
82a
82b
82c
82d
82e
106

>monthly pressure report<
CHECK PRESSURE
REPAIR IN NEXT
ROUTINE MAINTENANCE

>weekly pressure report<
CHECK PRESSURE
REPAIR WHEN POSSIBLE

>slow leak alert<
REPAIR SOON

>leak alert<
REPAIR NOW

>low pressure
alert<
STOP VEHICLE

86a
86b
86c

**Fig.**12

**Fig. 13**

Tire Pressure Monitoring per Vehicle / Tire (Sensor) / Window Length ( default 7 days)

10

90

**Data Storage**

Start

56 — In Trip + Stationary Pressure acquisition

104 — Record leak on window start

End

**Pressure Compensation**

58,64,70,74 — Pressure Smoothing + Compensation

**Fill up Detection**

Fill up?

Yes — Adjust Window to Last Inflation

80

84 — Issue a fill up event

**Rate of Change**

100 — Compute Pressure Rate of Change

102 — ROC is OK?

Yes

No

86b,c,d,e — Issue a leak event

**Fig.14**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2009036547 A1
- EP 1384604 A1
- EP 2692550 A1